# DEMANDE DE BREVET EUROPEEN

(11) **EP 0 635 785 A1**
(43) Date de publication de la demande: **25.01.1995**
(21) Numéro de dépôt: 94400460.5
(22) Date de dépôt: 03.03.1994
(51) Int. Cl.: G06F 11/00, G11B 19/04, G06F 3/06

(54) **Dispositif enregistreur de données en environnement perturbé**

(30) Priorité: 19.07.1993 FR 9308830
(71) Demandeur: DASSAULT ELECTRONIQUE, F-92214 Saint-Cloud (FR)
(72) Inventeur: Meunier, Hugues, F-78690 Les Essarts le Roi (FR)
(74) Mandataire: Plaçais, Jean-Yves

(57) **Abrégé**

Le dispositif enregistreur de données comprend : un support de sauvegarde temporaire (MEM) de technologie électronique, les données (D) provenant de l'interface (IT) étant enregistrées temporairement sur le support de sauvegarde temporaire (MEM) successivement selon leur réception, et des moyens (AC, TH) propres à obtenir au moins une grandeur choisie relative à une condition d'environnement ou de fonctionnement prédéterminée, et à délivrer une donnée représentative de ladite grandeur obtenue (AO, TO).

L'unité de commande (UT) comprend un mode d'enregistrement dans lequel la grandeur obtenue (AO, TO) est comparée à au moins une valeur prédéterminée (A2, T2), et en présence d'une grandeur obtenue supérieure à ladite valeur prédéterminée, aucun accès au support d'enregistrement (DIS) n'est autorisé, tandis qu'en présence d'une grandeur obtenue inférieure ou égale à ladite valeur prédéterminée, les données stockées temporairement sur le support de sauvegarde temporaire (MEM) sont enregistrées sur le support d'enregistrement (DIS) tant que l'accès audit support d'enregistrement est autorisé.

## Description

L'invention se rapporte au domaine technique de l'enregistrement des données en environnement perturbé.

Actuellement, la technologie des disques magnéto-optiques comme support d'enregistrement est utilisée limitativement dans un environnement bureautique.

Dans des conditions d'environnement plus sévères, notamment à bord d'un aéronef, cette technologie n'est pas satisfaisante dans la mesure où elle conduit à un enregistrement à tout le moins incorrect des données.

L'invention apporte une solution à ce problème.

Ainsi, le but de l'invention est de fournir un dispositif enregistreur de données apte à enregistrer correctement des données sur un support d'enregistrement de technologie magnétique et/ou optique, en environnement perturbé, en particulier à bord d'un aéronef.

L'invention porte sur un dispositif enregistreur de données, comprenant :
- une interface propre à recevoir des données à enregistrer ;
- des moyens d'enregistrement reliés à l'interface et propres à enregistrer des données émanant de l'interface sur un support d'enregistrement de technologie magnétique et/ou optique ; et
- une unité de commande propre à piloter l'enregistrement des données sur ledit support d'enregistrement.

Selon une définition générale de l'invention, le dispositif enregistreur comprend en outre :
- un support de sauvegarde temporaire de technologie électronique, les données provenant de l'interface étant enregistrées temporairement sur le support de sauvegarde temporaire successivement selon leur réception,
- des moyens propres à obtenir au moins une grandeur choisie relative à une condition d'environnement ou de fonctionnement prédéterminée, et à délivrer une donnée représentative de ladite grandeur obtenue, et
- l'unité de commande comprend un mode d'enregistrement dans lequel la grandeur obtenue est comparée à au moins une valeur prédéterminée, et
   en présence d'une grandeur obtenue supérieure à ladite valeur prédéterminée, aucun accès au support d'enregistrement n'est autorisé, tandis qu'en présence d'une grandeur obtenue inférieure ou égale à ladite valeur prédéterminée, les données stockées temporairement sur le support de sauvegarde temporaire sont enregistrées sur le support d'enregistrement tant que l'accès audit support d'enregistrement est autorisé.

En pratique, la grandeur est relative à l'accélération subie par le dispositif et les moyens d'obtention forment un accéléromètre disposé selon une relation géométrique prédéterminée par rapport aux axes sensibles des moyens d'enregistrement.

En complément ou en variante, la grandeur est relative à la température des moyens d'enregistrement et les moyens d'obtention forment un thermomètre disposé selon une relation géométrique prédéterminée par rapport aux moyens d'enregistrement.

En variante, la donnée représentative de ladite grandeur obtenue est issue des données reçues au niveau de l'interface.

De plus, en variante ou en complément, la grandeur est relative à l'alimentation du dispositif, les moyens d'obtention forment des moyens de détection de coupure d'alimentation, et il est prévu en outre des moyens d'alimentation propres à alimenter le support de sauvegarde temporaire.

Dans une application selon l'invention, le dispositif est destiné à être embarqué dans un aéronef.

Avantageusement, les moyens d'enregistrement sont logés dans un boîtier de forme générale parallélépipédique.

Selon un mode de réalisation de l'invention, le dispositif comprend en outre :
- un premier étrier en forme de U dont la base est propre à recevoir la face inférieure du boîtier, et dont les parois latérales sont fixées de façon amovible aux parois latérales du boîtier ;
- un second étrier en forme de U tourné dans le sens contraire est propre à couvrir la face supérieure du boîtier ; et
- des moyens de fixation élastiques disposés entre les parois latérales du premier étrier et celles du second étrier pour fixer de façon élastique le premier étrier au second étrier.

De préférence, les moyens de fixation élastiques comprennent une pluralité d'éléments de fixation chacun comprenant :
- une vis possédant une tête et une tige, ladite tige comprenant une extrémité filetée destinée à être enfoncée dans une paroi latérale du premier étrier,
- une première rondelle enfilée sur la tige jusqu'à un épaulement ménagé sur la tige à une hauteur prédéterminée,
- une pièce formant tampon enfilée sur la tige entre la première rondelle et la paroi latérale du premier étrier,
- un corps en forme de creuset dont les bords sont fixés sur une paroi latérale du second étrier, la tête de la vis ainsi qu'une partie de la tige étant logées dans le corps de façon flottante entre des premier et second points fixes espacés l'un de l'autre d'une distance prédéterminée, la tige traversant une ouverture ménagée dans le fond du creuset,
- une seconde rondelle enfilée sur la partie de la tige entre les des premier et second points fixes, et
- au moins des première et seconde membranes constituées chacune d'un matériau présentant une propriété de rappel élastique appropriée à amortir les vibrations susceptibles d'être subies par les moyens d'enregistrement jusqu'à un niveau prédéterminé, lesdites première et seconde membranes étant logées dans le corps de part et d'autre de la seconde rondelle et prenant appui respectivement sur les faces de la seconde rondelle de manière à amortir les vibrations mécaniques de la tige entre les premier et second points fixes.

Avantageusement, le dispositif comprend en outre des moyens de protection comprenant des moyens d'emmagasinage propres à emmagasiner provisoirement une tension d'alimentation et propres à délivrer ladite tension d'alimentation en présence de coupures d'alimentation d'une durée prédéterminée.

De préférence, les tables de description des fichiers des données à enregistrer sont sauvegardées dans le support de sauvegarde temporaire avant chaque enregistrement des données sur le support d'enregistrement.

D'autres caractéristiques et avantages de l'invention apparaîtront à la lumière de la description détaillée ci-après et des dessins dans lesquels :
- la figure 1 est une représentation schématique des éléments essentiels du dispositif enregistreur selon l'invention ;
- la figure 2 est un organigramme illustrant l'enregistrement des données selon l'invention ;
- les figures 3 et 4 représentent schématiquement la fixation du support d'enregistrement sur le premier étrier selon l'invention ;
- les figures 5 à 8 sont des vues de la structure mécanique du dispositif enregistreur selon l'invention ; et
- les figures 9 et 10 représentent schématiquement des moyens de fixation élastiques selon l'invention.

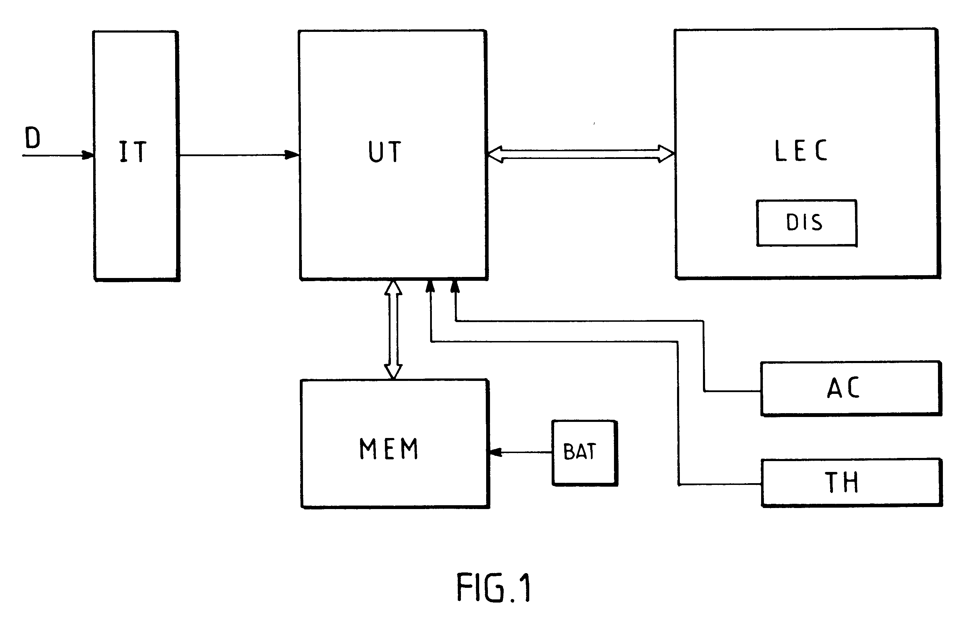

Sur la figure 1, les moyens connus du dispositif enregistreur de données comprennent :
- une interface IT propre à recevoir des données D à enregistrer ;
- des moyens d'enregistrement LEC reliés à l'interface IT et propres à enregistrer des données émanant de l'interface sur un support d'enregistrement DIS de technologie magnétique et/ou optique ; et
- une unité de commande UT propre à piloter l'enregistrement des données sur ledit support d'enregistrement DIS.

Comme mentionné ci-avant, dans des conditions d'environnement sévères, notamment à bord d'un aéronef, la technologie des supports d'enregistrement tels que les disques magnétiques, magnéto-optiques ou optiques n'est pas satisfaisante dans la mesure où elle conduit le plus souvent à un enregistrement incorrect de données.

Pour remédier à cet inconvénient, le dispositif enregistreur selon l'invention comprend en outre :
- un support de sauvegarde temporaire MEM de technologie électronique ; les données provenant de l'interface étant enregistrées temporairement sur le support de sauvegarde temporaire successivement selon leur réception,
- des moyens AC et/ou TH propres à obtenir au moins une grandeur choisie relative à une condition d'environnement ou de fonctionnement prédéterminée, et à délivrer une donnée représentative de ladite grandeur obtenue à un instant donné.

Par exemple, la grandeur est relative à l'accélération du dispositif et les moyens d'obtention AC forment un accéléromètre disposé selon une relation géométrique prédéterminée par rapport aux axes sensibles aux accélérations des moyens d'enregistrement LEC.

En variante, la donnée représentative de ladite grandeur obtenue est issue des données reçues au niveau de l'interface.

En outre ou en variante, la grandeur est relative à la température du dispositif et les moyens d'obtention TH forment en outre un thermomètre disposé selon une relation géométrique prédéterminée avec les moyens d'enregistrement LEC.

De plus, il est prévu des moyens d'alimentation BAT, propres à alimenter le support de sauvegarde temporaire MEM.

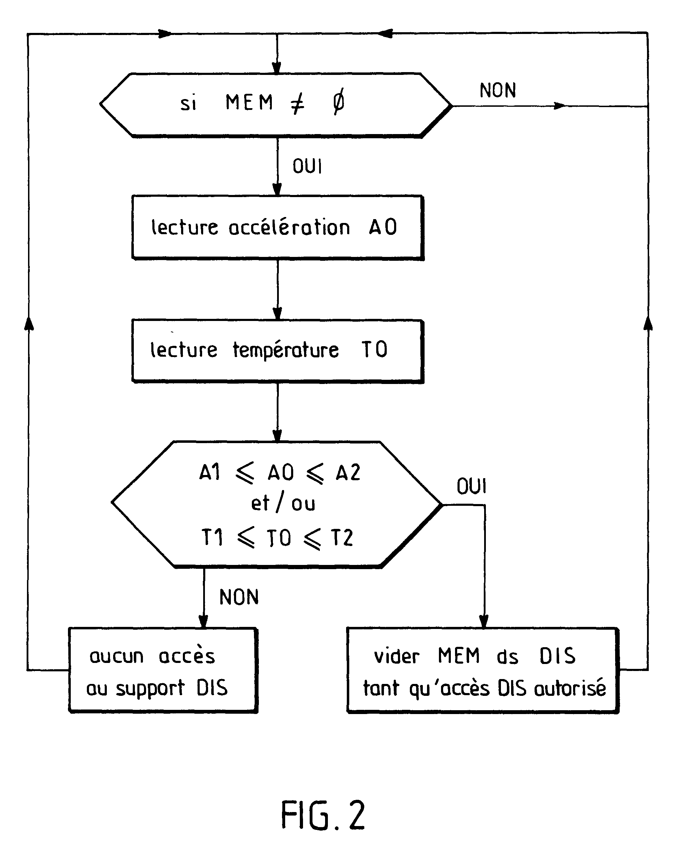

En référence à la figure 2, l'unité de commande comprend un mode de fonctionnement comprenant les étapes suivantes :

Lors de l'étape 1), lorsque la mémoire de sauvegarde temporaire MEM n'est pas vide, il est prévu de lire la grandeur obtenue A0 délivrée par les moyens formant accéléromètre à un instant donné.

Lors de l'étape 2), il est prévu de lire, le cas échéant, la grandeur obtenue T0 délivrée par les moyens formant thermomètre à un instant donné.

Lors de l'étape 3), il est prévu de comparer les valeurs obtenues A0 et T0 à des valeurs prédéterminées A2 et/ou T2.

En variante, il est prévu de vérifier si ces valeurs A0 ou T0 appartiennent aux plages A1-A2 et/ou T1-T2.

Dans l'étape 4), en présence d'une grandeur obtenue supérieure à ladite valeur prédéterminée A2 et/ou T2, ou n'appartenant pas aux plages A1-A2 et/ou T1-T2, aucun accès au support d'enregistrement LEC n'est autorisé .

Dans l'étape 5), en présence d'une grandeur A0 et/ou T0 inférieure ou égale à ladite valeur prédéterminée A2 et/ou T2, ou appartenant aux plages A1-A2 et/ou T1-T2, les données stockées temporairement sur le support de sauvegarde temporaire MEM sont enregistrées, par blocs de données de 8 kilo-octets par exemple, sur le support d'enregistrement DIS tant que l'accès audit support d'enregistrement est autorisé.

En pratique, le support de sauvegarde temporaire MEM est une mémoire à semi-conducteurs, de type RAM, EEPROM ou flash.

La capacité de cette mémoire MEM est choisie pour permettre le stockage de l'ensemble des données à mémoriser pendant la plus longue période où le support d'enregistrement peut se trouver en dehors de son domaine de fonctionnement.

Par exemple, la capacité de la mémoire est de l'ordre de 1,5 méga-octet .

Par ailleurs, le support d'enregistrement DIS est par exemple en technologie magnéto-optique, tel que celui vendu par la Société IBM, sous la référence LB3125B.

Selon l'invention, la technologie des disques magnéto-optiques, qui n'est à l'heure actuelle compatible qu'avec un environnement bureautique, devient avantageusement compatible dans des conditions d'environnement plus sévères, par exemple à bord d'un aéronef.

Par exemple, pour permettre un enregistrement correct des données sur le support d'enregistrement DIS en technologie magnéto-optique, malgré des accélérations linéaires subies par ledit support, supérieures à celles qu'il peut accepter, le dispositif enregistreur comprend au moins un accéléromètre AC et un support de sauvegarde temporaire MEM sont associés à une unité de commande ayant un mode de fonctionnement décrit en référence à la figure 2.

Plus précisément, dès que le dispositif enregistreur subit des accélérations telles qu'il se trouve en dehors de son domaine de fonctionnement, aucun accès au disque optique n'est effectué.

Lorsque les conditions d'environnement redeviennent normales, c'est-à-dire lorsque les accélérations sont plus faibles laissant le dispositif enregistreur dans sa plage de fonctionnement, les données temporairement mémorisées en mémoire à semi-conducteurs MEM sont écrites sur le disque optique LEC.

Par ailleurs, toutes nouvelles données reçues par le dispositif enregistreur pour enregistrement sont également mémorisées dans cette mémoire MEM.

Bien évidemment, ce mode de fonctionnement à base de mesures et de comparaisons s'applique à toutes grandeurs relatives aux conditions d'environnement ou en fonctionnement du dispositif enregistreur, par exemple l'accélération, la température, etc.

Un autre problème peut également intervenir, par exemple à bord d'un aéronef, il s'agit des coupures temporaires d'alimentation dont la durée est supérieure à celles qui sont masquées par le module d'alimentation interne du dispositif de l'aéronef.

L'invention apporte également une solution à ce problème.

Plus précisément, le dispositif enregistreur comprend des circuits de détection (non représentés) de variations d'alimentation signalant les coupures et les retours d'alimentation du module d'alimentation interne du dispositif (non représenté).

Associés à ces circuits de détection, il est prévu d'utiliser le support de sauvegarde temporaire MEM décrit ci-avant, par exemple à semi-conducteurs alimenté par des piles ou des batteries BAT et un algorithme logiciel permettant l'enregistrement des données selon le mode dont les étapes sont les suivantes.

Tout d'abord, toute donnée émanant de l'interface IT à enregistrer sur le support d'enregistrement DIS tel qu'un disque optique est temporairement mémorisée dans le support de sauvegarde temporaire MEM avant d'être écrite sur le disque optique.

Dès qu'une coupure d'alimentation est détectée par les circuits de détection, l'ensemble des données non encore écrites sur le disque optique DIS reste stocké dans le support de sauvegarde temporaire MEM.

Avantageusement, dans ce support de sauvegarde temporaire est également conservée une copie des tables de description des fichiers FAT pour "File Allocation Table" ou ROOT afin de pouvoir les restituer correctement lors de la reprise d'alimentation.

Lorsque l'alimentation revient, l'enregistrement sur le disque optique des données conservées dans le support de sauvegarde reprend.

Toutes nouvelles données reçues par le dispositif enregistreur pour enregistrement sont également mémorisées dans le support de sauvegarde temporaire.

Avantageusement, pour garantir l'intégrité des données enregistrées par l'équipement lors des coupures d'alimentation, il est prévu en outre une protection matérielle par des réserves d'énergie permettant de filtrer les micro-coupures inférieures à 100 millisecondes par exemple.

Avantageusement, la protection matérielle est faite à l'aide de capacités réservoirs (non représentées).

Cette protection matérielle vient s'ajouter à la protection logicielle décrite ci-avant, ainsi qu'à la sauvegarde dans la mémoire MEM des tables de description des fichiers, notamment les fichiers de FAT et ROOT.

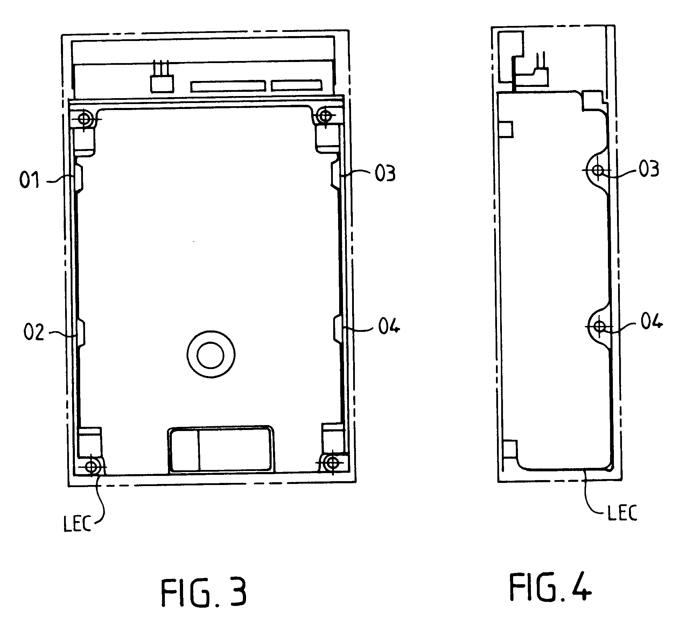

En référence aux figures 3 et 4, il est décrit la fixation des moyens d'enregistrement à bord d'un dispositif embarqué dans un aéronef.

Selon un aspect de l'invention, les moyens d'enregistrement tel que le lecteur magnéto-optique MD3125B est logé dans un boîtier de forme générale parallélépipédique.

Il est destiné à être fixé à l'aide de quatre trous de fixation latéraux 01 à 04 ménagés dans les parois latérales du boîtier.

Le premier étrier ETI profilé en U, reçoit la partie inférieure du boîtier. Les parois latérales du premier étrier ETI sont fixées de façon amovible aux parois latérales du boîtier à l'aide des trous de fixation 01 à 04.

Toutefois, la rigidité de base de ce cadre n'est pas suffisante et introduit des résonances parasitaires.

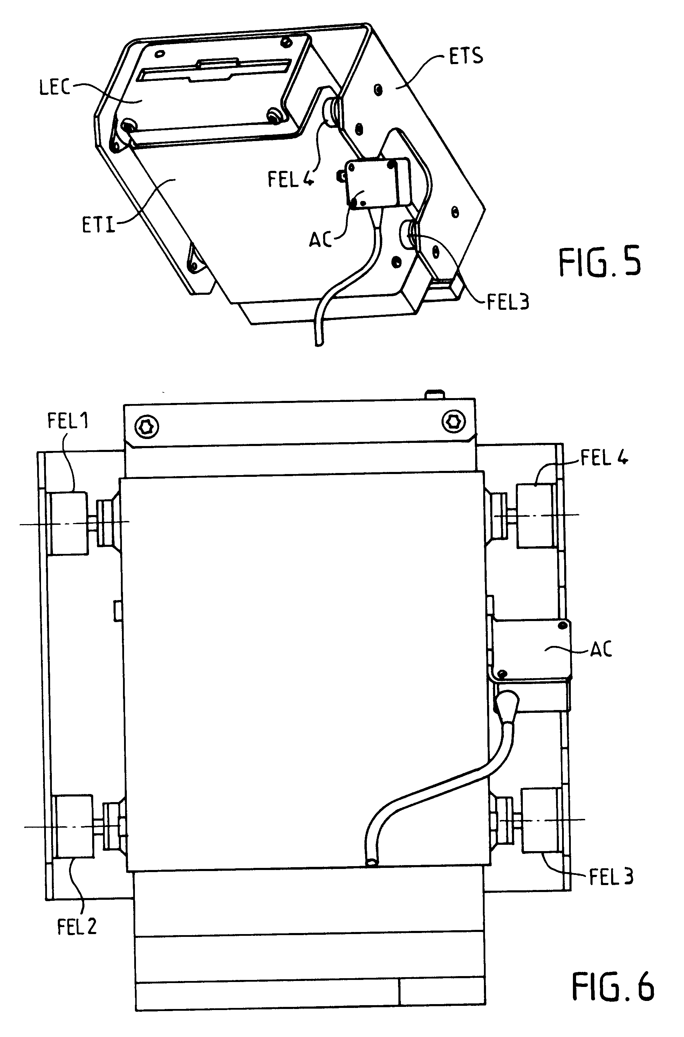

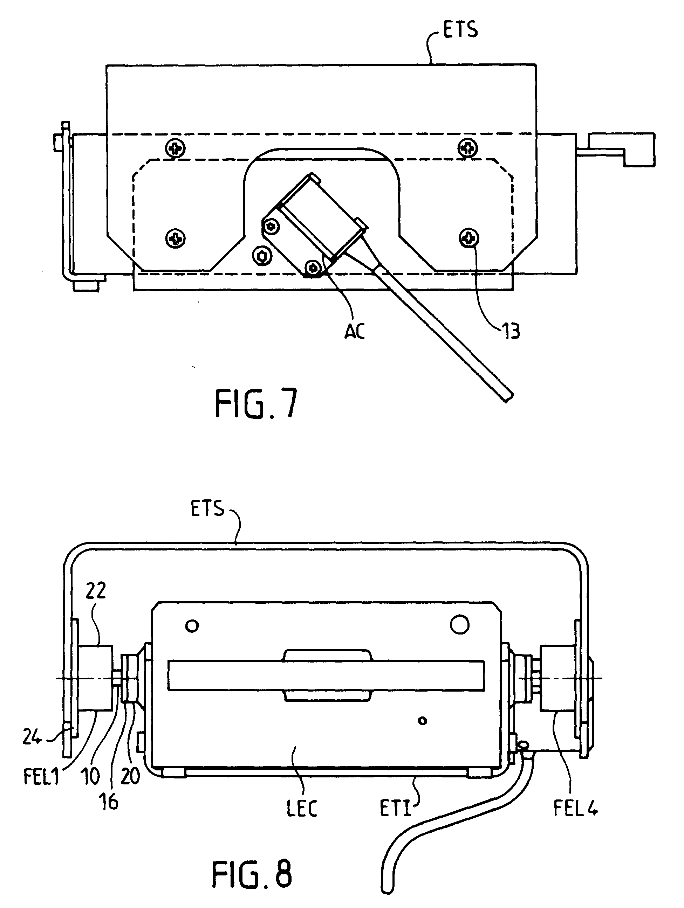

L'invention apporte également une solution à ce problème à l'aide d'un dispositif comprenant les moyens suivants (figures 5 à 8) :
- un second étrier ETS profilé en U, propre à couvrir la partie supérieure du support d'enregistrement ;
- des moyens de fixation FEL1 à FEL4 disposés entre les parois latérales du premier étrier ETI et celles du second étrier ETS, et propres à fixer de façon élastique le premier étrier ETI au second étrier ETS.

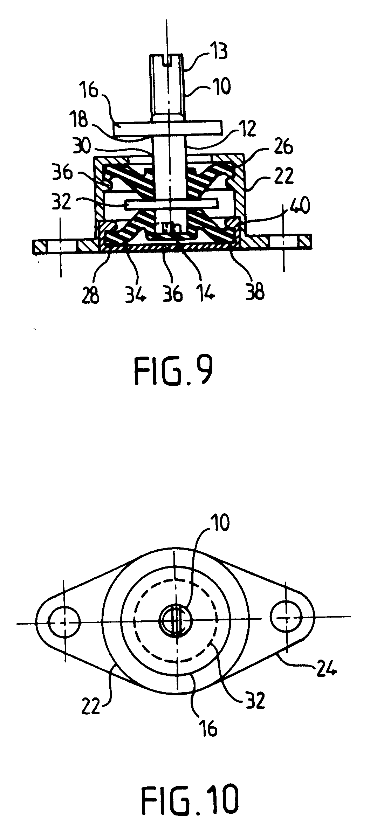

En référence aux figures 9 et 10, il est décrit maintenant les moyens de fixation élastiques.

Chaque élément FEL1 à FEL4 des moyens de fixation élastiques comprend :
- une vis 10 possédant une tête 14 et une tige 12, ladite tige 12 comprenant une extrémité filetée 13 destinée à être enfoncée dans une paroi latérale du premier étrier ETI ;
- une première rondelle 16 enfilée sur la tige 12 jusqu'à un épaulement 18 ménagé sur la tige 12 à une hauteur prédéterminée ;
- une pièce 20 formant tampon enfilée sur la tige entre la première rondelle 16 et la paroi latérale du premier étrier ETI ;
- un corps 22 en forme de creuset dont les bords 24 sont fixés sur une paroi latérale du second étrier ETS, la tête 14 de la vis ainsi qu'une partie de la tige étant logées dans le corps 22 de façon flottante entre deux points fixes 26, 28 espacés l'un de l'autre d'une distance prédéterminée, la tige traversant une ouverture 30 ménagée dans le fond du creuset ;
- une seconde rondelle 32 enfilée sur la partie de la tige entre les deux points fixes 26 et 28 ; et
- au moins des première et seconde membranes 34 et 36 constituées chacune d'un matériau présentant une propriété de rappel élastique appropriée à amortir les vibrations d'un niveau prédéterminé susceptibles d'être subies par le support d'enregistrement DIS, lesdites première et seconde membranes 34 et 36 étant logées dans le corps 22 de part et d'autre de la seconde rondelle 32 et prenant appui respectivement sur les faces de la seconde rondelle 32 de manière à amortir les vibrations mécaniques de la tige entre les deux points fixes.

Par exemple, chaque élément de fixation élastique est vendu sous la référence 567-GS-01 par la Société GAMMA (Société française).

Par ailleurs, le creuset 22 est fermé par un couvercle 38 collé sur les bords internes 40 du creuset 22.

Ces éléments de fixation assurent la reprise mécanique de l'ensemble constitué des moyens d'enregistrement LEC et des étriers ETI et ETS vers la structure mécanique de l'équipement.

Sur les figures 5 à 8, on a représenté un accéléromètre AC, par exemple celui vendu par la Société EURO SENSOR sous la référence 3145-02. Il est ici fixé sur l'étrier de rigidification ETS des moyens d'enregistrement LEC.

L'accéléromètre AC mesure les accélérations résiduelles suivant les axes sensibles des moyens d'enregistrement LEC.

Selon un mode de réalisation de l'invention, il est prévu deux accéléromètres AC disposés selon une relation géométrique prédéterminée, par exemple orthogonale l'un par rapport à l'autre pour mesurer les accélérations du dispositif enregistreur selon deux axes perpendiculaires.

En variante, les accélérations sont mesurées par un seul accéléromètre AC disposé selon lesdites accélérations.

En pratique, en présence d'une seule accélération, l'accéléromètre AC est disposé dans l'axe de ladite accélération tandis qu'en présence de deux accélérations orthogonales l'une à l'autre, l'accéléromètre AC est disposé selon un angle compris entre 30 et 60° par rapport à l'étrier ETS.

Par exemple, les membranes 34 et 36 sont constituées d'un matériau du type silicone.

Pour ce qui concerne les sondes de température, elles sont au nombre de deux, du type thermorésistances et disposées à proximité des moyens d'enregistrement LEC.

## Revendications

1. Dispositif enregistreur de données, comprenant:
- une interface (IT) propre à recevoir des données (D) à enregistrer,
- des moyens d'enregistrement (LEC) propres à enregistrer des données provenant de l'interface (IT) sur un support d'enregistrement (DIS) de technologie magnétique et/ou optique et comprenant une unité de commande (UT) propre à piloter l'enregistrement desdites données sur le support d'enregistrement (DIS),
caractérisé en ce que il comprend en outre
- un support de sauvegarde temporaire (MEM) de technologie électronique, les données (D) provenant de l'interface (IT) étant enregistrées temporairement sur le support de sauvegarde temporaire (MEM) successivement selon leur réception,
- des moyens (AC, TH) propres à obtenir au moins une grandeur choisie relative à une condition d'environnement ou de fonctionnement prédéterminée, et à délivrer une donnée représentative de ladite grandeur obtenue (AO, TO), et
- en ce que l'unité de commande (UT) comprend un mode d'enregistrement dans lequel la grandeur obtenue (AO, TO) est comparée à au moins une valeur prédéterminée (A2, T2), et
en présence d'une grandeur obtenue supérieure à ladite valeur prédéterminée, aucun accès au support d'enregistrement (DIS) n'est autorisé, tandis qu'en présence d'une grandeur obtenue inférieure ou égale à ladite valeur prédéterminée, les données stockées temporairement sur le support de sauvegarde temporaire (MEM) sont enregistrées sur le support d'enregistrement (DIS) tant que l'accès audit support d'enregistrement est autorisé.

2. Dispositif selon la revendication 1, caractérisé en ce que la grandeur est relative à l'accélération subie par le dispositif et en ce que les moyens d'obtention (AC) forment un accéléromètre disposé selon une relation géométrique prédéterminée par rapport aux axes sensibles des moyens d'enregistrement (LEC).

3. Dispositif selon la revendication 1, caractérisé en ce que la grandeur est relative à la température des moyens d'enregistrement (LEC) et en ce que les moyens d'obtention forment un thermomètre (TH) disposé selon une relation géométrique prédéterminée par rapport aux moyens d'enregistrement (LEC).

4. Dispositif selon la revendication 1, caractérisé en ce que la donnée représentative de ladite grandeur obtenue (AO,TO) est issue des données reçues au niveau de l'interface.

5. Dispositif selon la revendication 1, caractérisé en ce que la grandeur est relative à l'alimentation du dispositif, en ce que les moyens d'obtention forment des moyens de détection de coupure d'alimentation, et en ce qu'il est prévu en outre des moyens d'alimentation (BAT) propres à alimenter le support de sauvegarde temporaire (MEM).

6. Dispositif selon l'une des revendications précédentes, caractérisé en ce qu'il est destiné à être embarqué dans un aéronef.

7. Dispositif selon l'une des précédentes revendications, caractérisé en ce que les moyens d'enregistrement (LEC) sont logés dans un boîtier de forme générale parallélépipédique.

8. Dispositif selon la revendication 7, caractérisé en ce qu'il comprend en outre :
- un premier étrier (ETI) en forme de U dont la base est propre à recevoir la face inférieure du boîtier, et dont les parois latérales sont fixées de façon amovible aux parois latérales du boîtier ;
- un second étrier (ETS) en forme de U tourné dans le sens contraire est propre à couvrir la face supérieure du boîtier ; et
- des moyens de fixation élastiques (FEL1 à FEL4) disposés entre les parois latérales du premier étrier (ETI) et celles du second étrier (ETS) pour fixer de façon élastique le premier étrier au second étrier.

9. Dispositif selon la revendication 8, caractérisé en ce que les moyens de fixation élastiques (FEL1 à FEL4) comprennent une pluralité d'éléments de fixation chacun comprenant :
- une vis (10) possédant une tête (14) et une tige (12), ladite tige comprenant une extrémité filetée destinée à être enfoncée dans une paroi latérale du premier étrier (ETI),
- une première rondelle (14) enfilée sur la tige (12) jusqu'à un épaulement (18) ménagé sur la tige (12) à une hauteur prédéterminée,
- une pièce (20) formant tampon enfilée sur la tige entre la première rondelle (165) et la paroi latérale du premier étrier,
- un corps (22) en forme de creuset dont les bords sont fixés sur une paroi latérale du second étrier (ETS), la tête de la vis ainsi qu'une partie de la tige étant logées dans le corps (22) de façon flottante entre des premier et second points fixes espacés l'un de l'autre d'une distance prédéterminée, la tige traversant une ouverture (30) ménagée dans le fond du creuset,
- une seconde rondelle (32) enfilée sur la partie de la tige entre les des premier et second points fixes (26 et 28), et
- au moins des première et seconde membranes (34 et 36) constituées chacune d'un matériau présentant une propriété de rappel élastique appropriée à amortir les vibrations susceptibles d'être subies par les moyens d'enregistrement jusqu'à un niveau prédéterminé, lesdites première et seconde membranes (34 et 36) étant logées dans le corps de part et d'autre de la seconde rondelle (32) et prenant appui respectivement sur les faces de la seconde rondelle de manière à amortir les vibrations mécaniques de la tige entre les premier et second points fixes.

10. Dispositif selon l'une des précédentes revendications, caractérisé en ce qu'il comprend en outre des moyens de protection comprenant des moyens d'emmagasinage propres à emmagasiner provisoirement une tension d'alimentation et propres à délivrer ladite tension d'alimentation en présence de coupures d'alimentation d'une durée prédéterminée.

11. Dispositif selon l'une des précédentes revendications, caractérisé en ce que les tables de description des fichiers des données à enregistrer sont sauvegardées dans le support de sauvegarde temporaire (MEM) avant chaque enregistrement des données sur le support d'enregistrement.
